# EUROPÄISCHE PATENTSCHRIFT

(11) **EP 0 689 956 B1**
(45) Veröffentlichungstag und Bekanntmachung des Hinweises auf die Patenterteilung: **05.03.1997**
(21) Anmeldenummer: 95104898.2
(22) Anmeldetag: 01.04.1995
(51) Int. Cl.: B60N 2/44, B60N 2/48

(54) **Polsterkörper, wie für eine Kraftfahrzeugkopfstütze od-dgl., mit einem den Polsterkörper umspannenden Polsterüberzug**
Upholstered body for headrests, having a cover
Elément rembourré pour appui-tête, pourvu d'une housse

(30) Priorität: 29.06.1994 DE 4422774
(43) Veröffentlichungstag der Anmeldung: 03.01.1996
(73) Patentinhaber: PETER BUTZ GmbH & Co Verwaltungs-KG, D-40764 Langenfeld (DE)
(72) Erfinder: Küttner, Jürgen, D-51371 Leverkusen (DE); Pausch, Friedhelm, D-42697 Solingen (DE)
(74) Vertreter: Patentanwälte Ostriga & Sonnet

(56) Entgegenhaltungen:
- EP-A- 0 341 683
- DE-A- 3 116 980
- DE-A- 3 627 785
- DE-A- 3 841 531

## Beschreibung

Die Erfindung betrifft einen Polsterkörper entsprechend dem Oberbegriff des Anspruchs 1. Ein solcher Polsterkörper ist durch die DE-C-3 116 980 (C2) bekanntgeworden.

Bei dem bekannten Polsterkörper einer Kopfstütze für Kraftfahrzeugsitze weist jeder der beiden Längsränder des Polsterüberzuges eine Hakenleiste auf, deren Hakenvorsprünge voneinander wegweisen und unterschiedlich tief in ein nachgiebiges U-Nutprofil eingreifen, welches unterseitig des Polsterträgers der Kraftfahrzeugkopfstütze befestigt ist.

Die bekannte Polsterüberzug-Befestigungsanordnung erfordert in jeder Nutwand des U-Nutprofils Durchbrüche zur Bildung der mit den Hakeninnenflächen der Hakenvorsprünge zusammenwirkenden Hinterschneidungsflächen.

Ausgehend von der in der DE-C-3 116 980 (C2) beschriebenen Befestigungsanordnung für die beiden miteinander zu verbindenden Längsränder eines Polsterüberzuges, liegt der Erfindung die Aufgabe zugrunde, die Bauweise einer Befestigungsanordnung zu vereinfachen.

Entsprechend der Erfindung wird diese Aufgabe dadurch gelöst, daß die Hakenvorsprünge beider Hakenleisten in dieselbe Richtung weisen, daß die Hakenvorsprünge unterschiedlich lang sind, daß der der ersten Hakenleiste zugeordnete längere Hakenvorsprung, eine der Nutbreite des U-Nutprofils entsprechenden Länge aufweisend, mit seiner Hakenaußenfläche dem Nutgrund benachbart ist und sich mit seiner Hakeninnenfläche auf der Hakenaußenfläche des Hakenvorsprungs der zweiten Hakenleiste abstützt, und daß allein die Hakeninnenfläche des Hakenvorsprungs der zweiten Hakenleiste eine an nur einer Nutwand des U-Nutprofils vorgesehene Hinterschneidungsfläche hintergreift.

Entsprechend der Erfindung weist das U-Nutprofil lediglich an einer Nutwand eine Hinterschneidungsfläche bzw., in Axialabständen aufeinanderfolgend, einzelne Hinterschneidungsflächen auf. Diese gegenüber dem Bekannten (DE-C-3 116 980 (C2)) einfachere Bauform ermöglicht zugleich einfachere Werkzeuge bei der Herstellung im Kunststoffspritzgießverfahren.

Lediglich die weniger tief in das U-Nutprofil eingreifende zweite Hakenleiste weist einen verhältnismäßig kurzen Hakenvorsprung auf, mit dessen Hakeninnenfläche sie die einzige nutwandseitige Hinterschneidungsfläche hintergreift. Die erste Hakenleiste wird unter Verzicht auf besondere nutwandseitige Hinterschneidungsflächen in eigenartiger Weise im U-Nutprofil gesichert. Und zwar stützt sich deren hinsichtlich seiner Länge der Nutbreite entsprechende Hakenvorsprung mit seiner Nutinnenfläche oben auf der Hakenaußenfläche des Hakenvorsprungs der zweiten Hakenleiste ab. Die Hakenaußenfläche des Hakenvorsprungs der zweiten Hakenleiste bildet demnach in nicht naheliegender Weise eine Hinterschneidungsfläche, auf welcher sich die zweite Hakenleiste sicher abstützen kann.

In weiterer Ausgestaltung der Erfindung ragt die Hinterschneidungsfläche bzw. ragen die in Axialrichtung aufeinanderfolgenden Hinterschneidungs-Teilflächen aus der Nutwand nach innen in das U-Nutprofil vor. Eine derartige Anordnung ist durch die DE-A-3 841 531 (A1) - allerdings in Verbindung mit lediglich einer Hakenleiste - an sich bekannt.

In den Zeichnungen ist ein bevorzugtes Ausführungsbeispiel der Erfindung näher dargestellt, es zeigt,
Fig. 1 einen Polsterkörper einer Kraftfahrzeugkopfstütze mit einem im Vertikalschnitt dargestellten Detail der Polsterüberzugs-Befestigungsanordnung und
Fig. 2 in vergrößerter Darstellung des in Fig. 1 mit II bezeichneten Details.

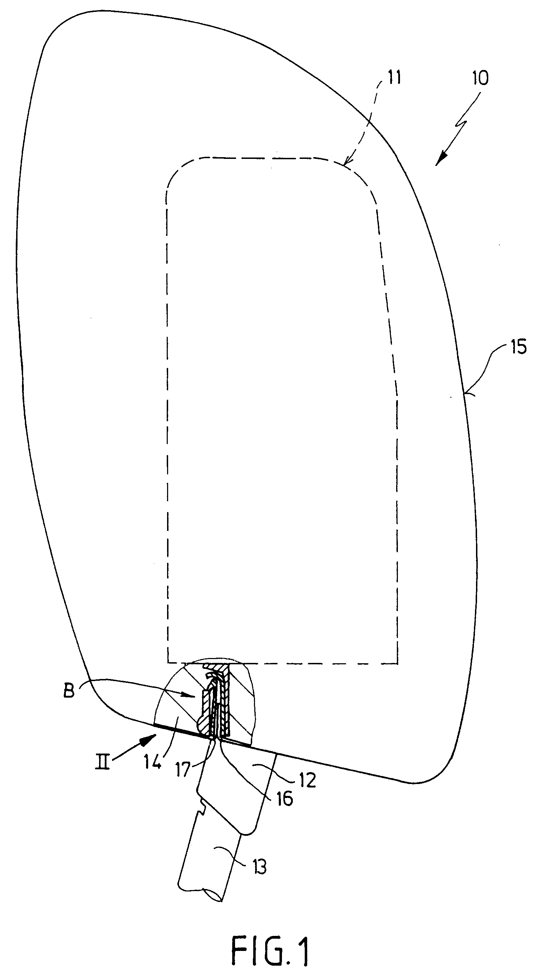

In Fig. 1 ist eine Kraftfahrzeugkopfstütze insgesamt mit der Bezugsziffer 10 bezeichnet.

Die Kraftfahrzeugkopfstütze 10 weist einen gestrichelt dargestellten Kopfpolsterträger 11 mit daran angeschlossenen Gelenkarmen 12 für Tragstangen 13 auf.

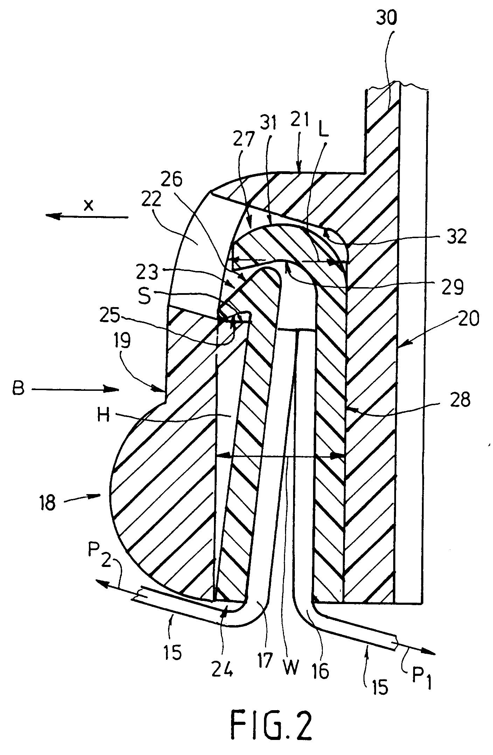

Der eigentliche Polsterkörper ist mit 14 beziffert, welcher ringsum mittels eines haubenartigen Polsterüberzuges 15 umspannt ist, dessen Montageöffnung von zwei Längsrändern begrenzt ist, die mit 16 und 17 bezeichnet sind. Die hierzu vorgesehene Überzugs-Befestigungsanordnung ist in Fig. 1 insgesamt mit B bezeichnet und in Fig. 2 vergrößert dargestellt:

Die Befestigungsanordnung B weist zunächst ein U-Nutprofil 18 mit zwei Nutwänden 19, 20 und einem Nutboden 21 auf.

Die vordere Nutwand 19 weist mit einer gewissen Axiallänge in die Papierebene hineinreichende Aussparungen 22 auf, von denen mehrere in Axialrichtung (d.h. aus der Papierebene heraus bzw. hinein) aufeinanderfolgende vorgesehen sind. Mit der Axiallänge der Aussparung 22 sind nach innen in den Nut-Hohlraum H vorragende Hinterschneidungsflächen S vorgesehen, auf welchen sich jeweils der Hakenvorsprung 23 einer zweiten Hakenleiste 24 mit seiner Hakeninnenfläche 25 abstützt.

Auf der Hakenaußenfläche 26 des Hakenvorsprungs 23 der zweiten Hakenleiste 24 stützt sich die Hakeninnenfläche 29 des Hakenvorsprungs 27 der ersten Hakenleiste 28 ab.

Aus Fig. 2 wird deutlich, daß die Länge L des Hakenvorsprunges 27 der ersten Hakenleiste 28 im wesentlichen der Breite bzw. der Weite W des Nut-Hohlraums entspricht.

Das U-Nutprofil 18 sowie die beiden Hakenleisten 28 und 24 bestehen aus einem zähen nachgiebigen Werkstoff und bilden zweckmäßig z.B. Kunststoff-Spritzgußteile.

Der Hakenvorsprung 27 ist entsprechend der in Fig. 2 dargestellten Ausführungsform mit verhältnismäßig geringem Spielraum unmittelbar benachbart dem Nutgrund 32 des Nutbodens 21 angeordnet. Die Längsränder 16 und 17 des Polsterüberzuges 15 liegen innerhalb des Nuthohlraums H dicht aneinander. Die Hakenleisten 28, 24 sowie die beiden Bezugs-Längsränder 16, 17 füllen die Weite W des Nuthohlraums H im wesentlichen vollständig aus. Die in Spannrichtung wirkenden, durch Pfeile gekennzeichneten Zugkräfte P1 und P2 haben zur Folge, daß sich die Hakenvorsprünge 23, 27 immer enger und fester aneinander drängen und sich letztlich allein an einer einzigen einseitig am U-Nutprofil 18 vorgesehenen Hinterschneidungsfläche S abstützen.

Die Befestigungsanordnung B kann sowohl isoliert, d .h. ohne feste Anbindung an einen übergeordneten Körper, im Polsterkörper 14 gehalten sein. Ebenso gut ist es möglich, der Befestigungsanordnung B eine feste Basis durch eine Stützverbindung 30 an einem Polsterträger, beispielsweise am Kopfpolsterträger 11, zu geben.

Aus Fig. 2 wird besonders deutlich, daß die beiden Hakenvorsprünge 28, 23 mit ihren Hakenspitzen in dieselbe Richtung x zeigen.

Die Hakenaußenfläche des Hakenvorsprungs 27 der ersten Hakenleiste 28 ist mit 31 und der ihm benachbarte Nutgrund mit 32 bezeichnet.

## Patentansprüche

1. Polsterkörper (14), wie für eine Kraftfahrzeugkopfstütze (10) od.dgl., mit einem den Polsterkörper (14) umspannenden Polsterüberzug (15), dessen miteinander zu verbindenden beiden Längsränder (16, 17) mit einer ersten (28) und einer zweiten Hakenleiste (24) aus nachgiebigem Werkstoff in ein ebenfalls nachgiebiges U-Nutprofil (18) unterschiedlich tief eingreifen und dort mit Hakeninnenflächen (29, 25) ihrer Hakenvorsprünge (27, 23) Hinterschneidungsflächen (26, S) hintergreifen, und wobei sich beide Hakenleisten (28, 24) innerhalb des U-Nutprofils (18) gegenseitig festlegen, dadurch gekennzeichnet, daß die Hakenvorsprünge (27, 23) beider Hakenleisten (28, 24) in dieselbe Richtung (x) weisen, daß die Hakensvorsprünge (27, 23) unterschiedlich lang sind, daß der der ersten Hakenleiste (28) zugeordnete längere Hakenvorsprung (27), eine der Nutbreite (W) des U-Nutprofils (18) entsprechende Länge (L) aufweisend, mit seiner Hakenaußenfläche (31) dem Nutgrund (32) benachbart ist und sich mit seiner Hakeninnenfläche (29) auf der Hakenaußenfläche (26) des Hakenvorsprungs (23) der zweiten Hakenleiste (24) abstützt, und daß allein die Hakeninnenfläche (25) des Hakenvorsprungs (23) der zweiten Hakenleiste (24) eine an nur einer Nutwand (19) des U-Nutprofils (18) vorgesehene Hinterschneidungsfläche (S) hintergreift.

2. Polsterkörper nach Anspruch 1, dadurch gekennzeichnet, daß die Hinterschneidungsfläche (S) aus der Nutwand (19) nach innen in das U-Nutprofil (18) vorragt.

## Claims

1. Padded body (14), such as for a motor vehicle headrest (10) or the like, with a padding cover (15) surrounding the padded body (14), the two longitudinal edges (16, 17) of which, which are to be joined to one another, grip to different depths with a first (28) and a second hook bar (24) of yielding material into a similarly yielding U-groove profile (18) and grip behind undercut surfaces (26, S) there with hook inner surfaces (29, 25) of their hook projections (27, 23), the two hook bars (28, 24) being set opposite to one another within the U-groove profile (18), characterized in that the hook projections (27, 23) of the two hook bars (28, 24) point in the same direction (x), in that the hook projections (27, 23) are of different lengths, in that the longer hook projection (27), which is assigned to the first hook bar (28) and has a length (L) corresponding to the groove width (W) of the U-groove profile (18), is adjacent to the groove floor (32) with its hook outer surface (31) and is supported with its hook inner surface (29) on the hook outer surface (26) of the hook projection (23) of the second hook bar (24), and in that only the hook inner surface (25) of the hook projection (23) of the second hook bar (24) grips behind an undercut surface (S) provided on only one groove wall (19) of the U-groove profile (18).

2. Padded body according to claim 1, characterized in that the undercut surface (S) projects out of the groove wall (19) inwards into the U-groove profile (18).

## Revendications

1. Elément rembourré (14), tel que pour appuie-tête (10) pour véhicule automobile ou analogue, comportant un revêtement de rembourrage (15) entourant l'élément rembourré (14) et dont les deux bords longitudinaux (16, 17) à relier ensemble s'engagent, à une profondeur différente, par une première bande de crochet (28) et par une deuxième bande de crochet (24) réalisée en un matériau déformable, dans un profil à rainure en U (18) également déformable, et y saisissent par l'arrière, par les surfaces intérieures de crochet (29, 25) de leurs saillies de crochet (27, 23), des surfaces en contre-dépouille (26, S), et les deux bandes de crochet (28, 24) se fixant mutuellement à l'intérieur du profil en rainure en U (18), caractérisé en ce que les saillies de crochet (27, 23) des deux bandes de crochet (28, 24) sont tournées dans la même direction (x), en ce que les saillies de crochet (27, 23) ont une longueur différente, en ce que la saillie de crochet (27) plus longue, associée à la première bande de crochet (28), est voisine du fond de rainure (32), par sa surface extérieure de crochet (31), en présentant une longueur (L) correspondant à la largeur de rainure (W) du profil à rainure en U (18) et prend appui par sa surface intérieure de crochet (29) sur la surface inférieure de crochet (26) de la saillie de crochet (23) de la deuxième bande de crochet (24), en ce que la surface intérieure de crochet (25) seule de la saillie de crochet (23) de la deuxième bande de crochet (24) saisit par l'arrière une surface de contre-dépouille (S) prévue seulement sur une paroi de rainure (19) du profil à rainure en U (18).

2. Elément rembourré selon la revendication 1, caractérisé en ce que la surface de contre-dépouille (S) fait saillie hors de la paroi de rainure (19), vers l'intérieur, dans le profil à rainure en U (18).
